# EUROPEAN PATENT APPLICATION

(11) **EP 2 458 324 A1**
(43) Date of publication of application: **30.05.2012**
(21) Application number: 11167879.3
(22) Date of filing: 27.05.2011
(51) Int. Cl.: G01B 11/24

(54) **Thread form measurement device**

(30) Priority: 22.11.2010 TW 099222615
(71) Applicant: Ching Chan Optical Technology Co., Ltd., Kaohsiung City 829 (TW)
(72) Inventor: Chen, Simon, Kaohsiung City 829 (TW)
(74) Representative: Stöckeler, Ferdinand

(57) **Abstract**

A thread form measurement device for measuring a threaded object (20) includes two grip arms (411) adjustably spaced apart from each other by a holding gap (412) for holding the threaded object (20), and a support frame (51) disposed to be movable uprightly relative to the grip arms (411) and carry an illuminating unit (52) and an image capturing unit (53) that are spaced apart from each other such that a light path of a beam emitted from the illuminating unit (52) is in alignment with the holding gap (412). The contour of an image captured in the image capturing unit (53) is formed by a non-light-exposed area projected by a profile of the threaded object (20). By processing of a processing unit of a controller (71), quantitative information of the thread form of the threaded object (20) can be obtained.

## Description

This invention relates to an image measurement device, more particularly to a thread form measurement device in which an optical image of a profile of the thread form of a threaded object is projected for measurement and inspection.

Threaded objects, such as screws, bolts, nuts, gears, etc., are necessary in many applications. There is a need for producing threaded objects with high quality and at high manufacturing speed. Conventionally, in producing threaded objects, the thread form including thread characteristics, such as length, radius, pitch, etc., of a threaded object is inspected by a machine tool operator who uses a vernier caliper to measure the dimension of the threaded object, and a thread gauge to measure the pitch. Such measuring operations are labor intensive and require a trained person.

An obj ect of the present invention is to provide a thread form measurement device which can measure a thread form of a threaded object conveniently and precisely, yet with a simple construction.

According to this invention, the thread form measurement device includes a platform, a mounting post extending from the platform in an upright direction, a support frame disposed to be movable relative to the mounting post along an upright first guideway, left and right holding brackets disposed to respectively extend from left and right support regions of the support frame and apart from each other by an accommodation space, an illuminating unit disposed on and carried by the right holding bracket to emit a beam of light along a light path toward the accommodation space, an image capturing unit disposed on and carried by the left holding bracket and having an object lens configured in alignment with the light path to capture the light beam, a seat post disposed to extend uprightly from the platform to terminate at a stage surface, and front and rear grip arms disposed in the accommodation space and on the stage surface and adjustably spaced apart from each other by a holding gap. The holding gap is adapted to have a threaded object to be measured posed therein with a shank axis of the threaded object oriented along the holding gap, and is configured to be aligned with the light path such that a contour of an image captured in the image capturing unit is formed by a non-light-exposed area which is projected by a profile of the threaded object.

Other features and advantages of the present invention will become apparent in the following detailed description of the preferred embodiments of the invention, with reference to the accompanying drawings, in which:
Fig. 1 is a partly sectioned side view of the first preferred embodiment of a thread form measurement device according to this invention;
Fig. 2 is a perspective view of a part of the first preferred embodiment;
Fig. 3 is a partially front view of the part in Fig. 2;
Fig. 4 is a side view of the part in Fig. 2;
Fig. 5 is a front view of the part in Fig. 2;
Fig. 6 is a front view similar to Fig. 5 when a threaded object is positioned;
Fig. 7 is a side view similar to Fig. 4 when a threaded object is positioned;
Fig. 8 is a front view of a part of the second preferred embodiment of a thread form measurement device according to this invention; and
Fig. 9 shows an image captured in an image capturing unit of the thread form measurement device according to this invention.

Before the present invention is described in greater detail, it should be noted that same reference numerals have been used to denote like elements throughout the specification.

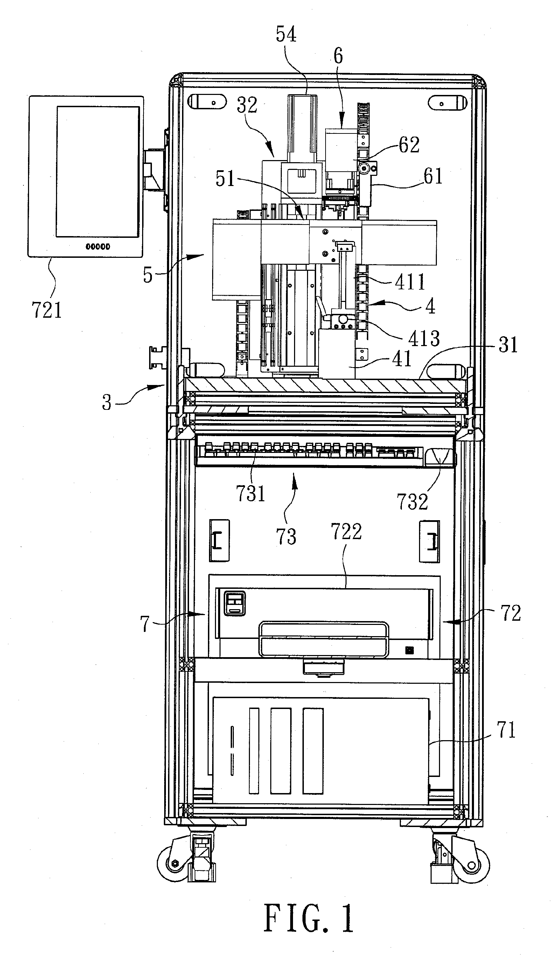

Referring to Fig. 1, the first preferred embodiment of a thread formmeasurement device according to the present invention is shown to comprise a machine frame 3, a measuring assembly 5, a grip unit 4, a spindle unit 6, and a control unit 7.

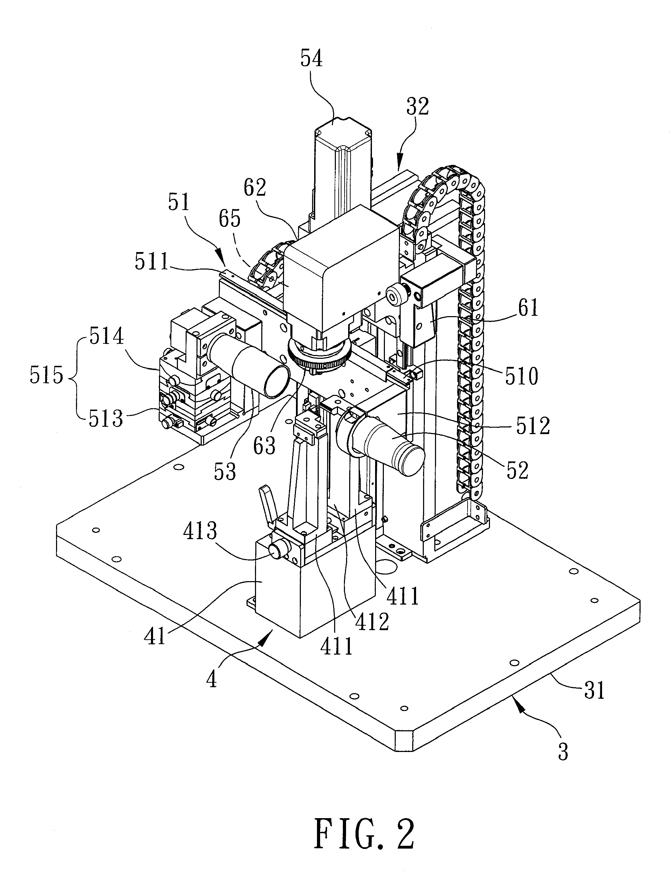

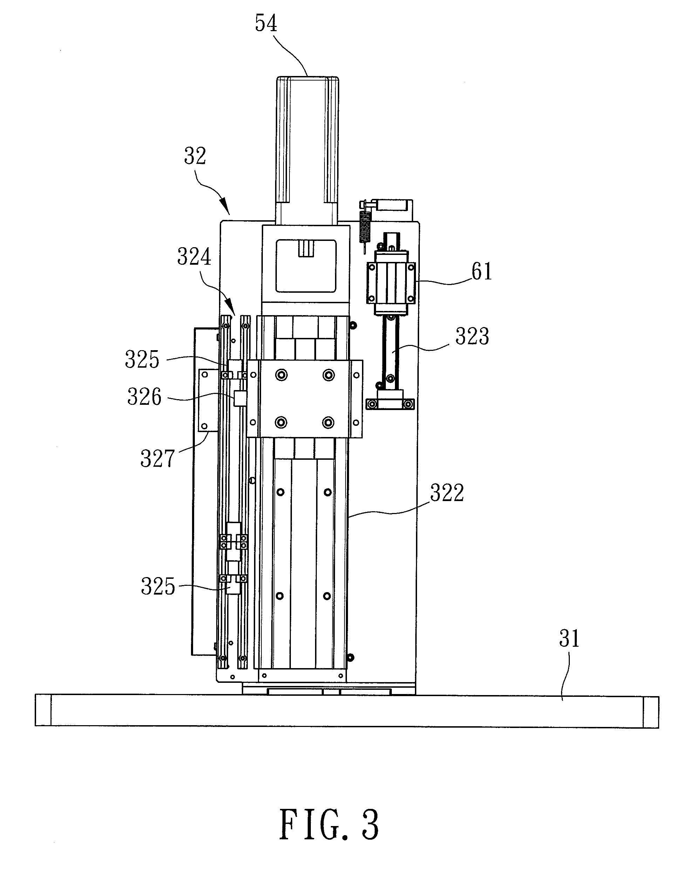

Referring to Figs. 2 and 3, the machine frame 3 includes a platform 31 and a mounting post 32 extending from the platform 31 in an upright direction. The mounting post 32 has first and second guideways 322, 323 extending in the upright direction and spaced apart from each other.

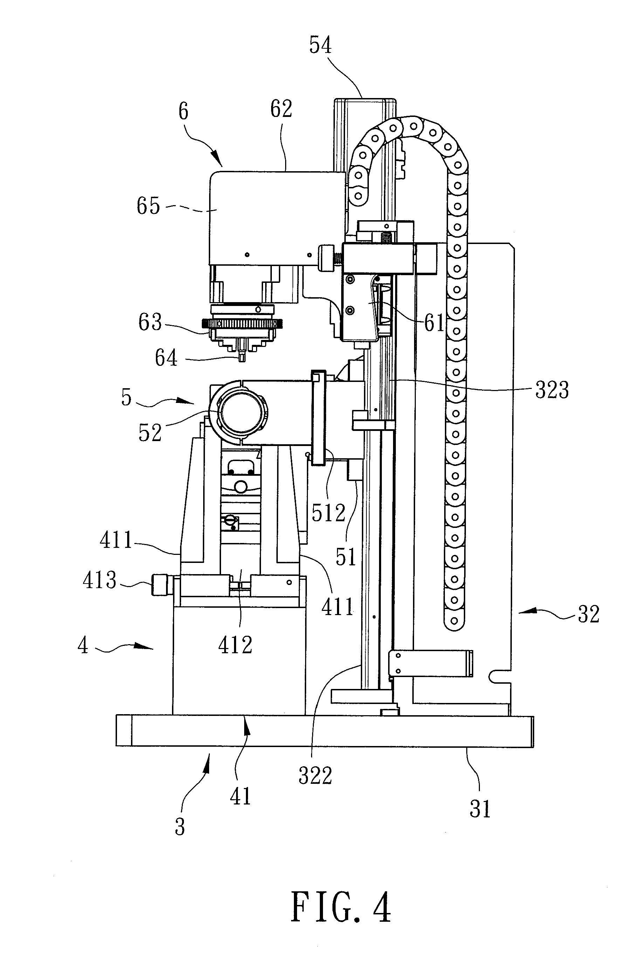

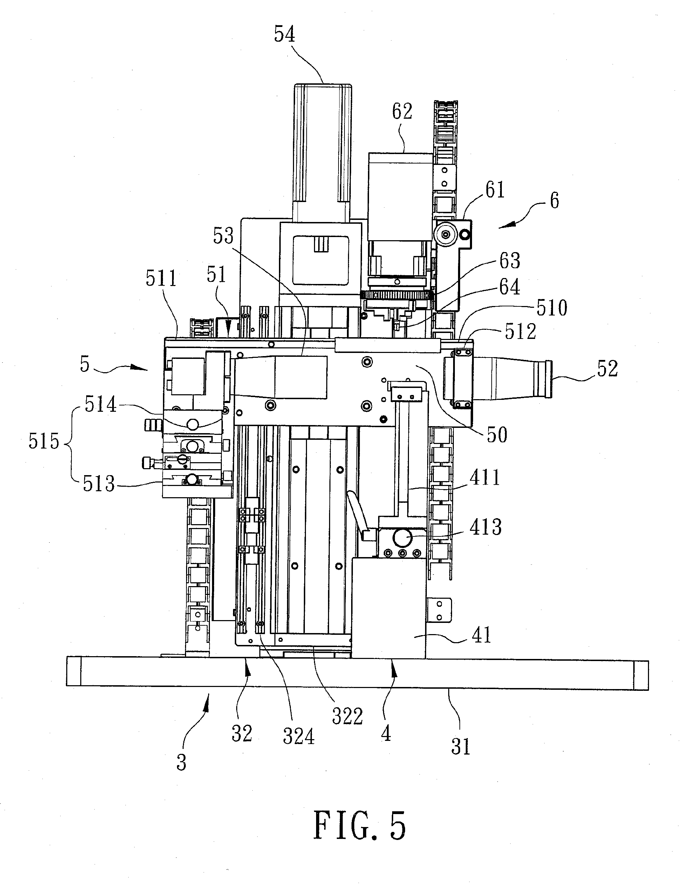

With reference to Figs. 4 and 5, the measuring assembly 5 includes a first support frame 51, left and right holding brackets 515, 512, an illuminating unit 52, an image capturing unit 53, and a first drive unit 54.

The first support frame 51 is disposed to be movable relative to the mounting post 32 along the first guideway 322, and has left and right support regions 511, 510 opposite to each other in a longitudinal direction transverse to the upright direction. The left and right holding brackets 515, 512 are disposed to extend from the left and right support regions 511, 510, respectively, in a direction transverse to both the upright direction and the longitudinal direction, and are apart from each other by an accommodation space 50. The left holding bracket 515 includes a linearly moving portion 513 which is disposed on and linearly movable relative to the left support region 511 in the longitudinal direction so as to adjust a distance between the left and right holding brackets 515, 512, and a turning portion 514 which is disposed on and angularly displaceable relative to the linearly moving portion 513. The illuminating unit 52 is disposed on and is carried by the right holding bracket 512 to emit a beam of light along a light path toward the accommodation space 50. The image capturing unit 53 is disposed on and carried by the turning portion 514 of the left holding bracket 515, and has an object lens configured in alignment with the light path to capture the light beam. By virtue of the linearly moving portion 513 and the turning portion 514, the distance and angularly position of the object lens relative to the illuminating unit 52 can be adjusted. The first drive unit 54 is controlled to move the first support frame 51 along the first guideway 322. In this embodiment, the illuminating unit 52 is a light source, and the image capturing unit 53 is a video camera. The first drive unit 54 is a servo motor.

Further, as shown in Fig. 3, an optoelectronic limit switch includes upper and lower sensors 325 disposed on the mounting post 32 and spaced apart from each other along a path 324, and a reference member 326 disposed on the first support frame 51 to limit the movement of the first support frame 51 between uppermost and lowermost positions to thereby guard against excess movement of the first support frame 51. An optoelectronic sensing unit 327 is disposed on the mounting post 32 and has a sensor which extends in the upright direction and which is disposed to determine a distance of the movement of the first support frame 51.

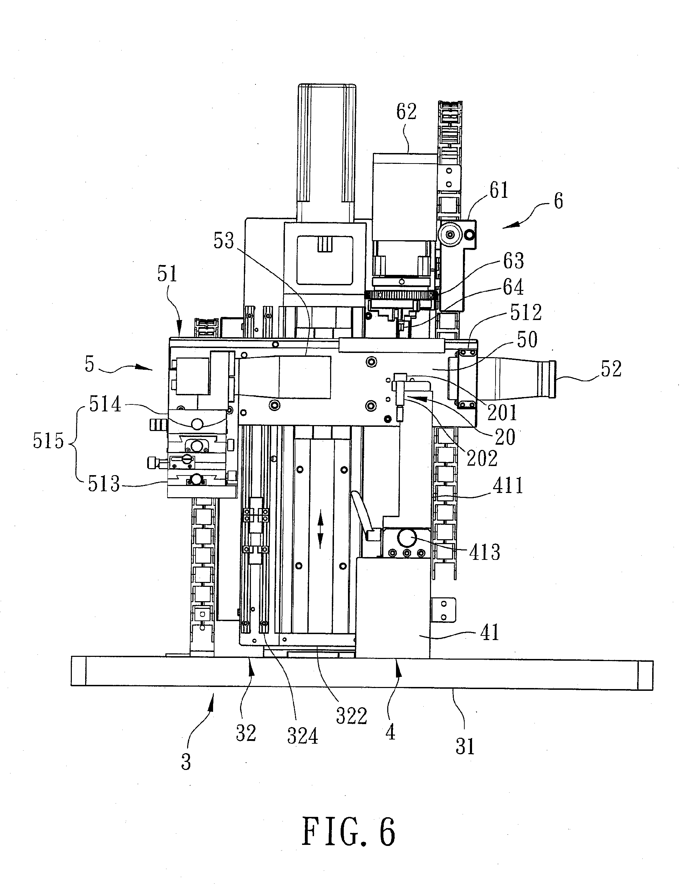

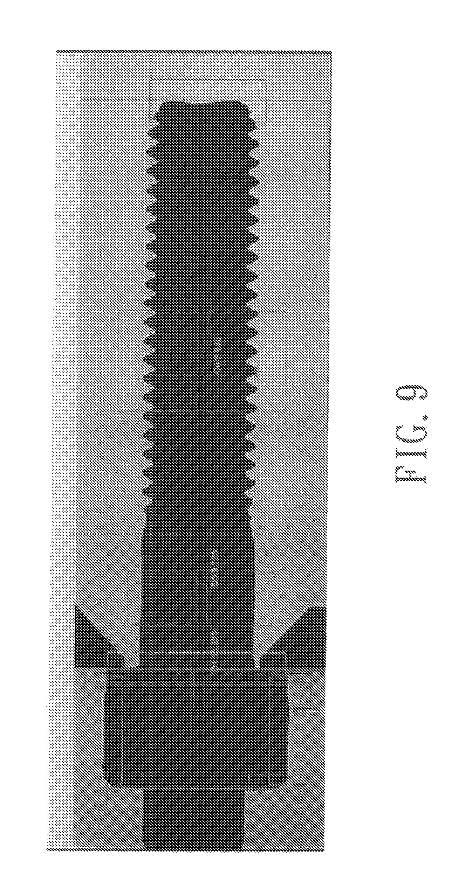

The grip unit 4 includes a seat post 41, front and rear grip arms 411, and an adjusting screw member 413. The seat post 41 is disposed to extend from the platform 31 in the upright direction to terminate at a stage surface. The front and rear grip arms 411 are disposed in the accommodation space 50 and on the stage surface of the seat post 41, and are adjustably spaced apart from each other in the transverse direction by a holding gap 412. The adjusting screw member 413 is disposed to synchronously move the front and rear grip arms 411 closer to or away from each other so as to adjust the dimension of the holding gap 412. As shown in Fig. 6, the holding gap 412 is adapted to have a threaded object 20 posed therein with a shank axis of the threaded object 20 oriented along the holding gap 412 when the threaded object 20 is held by and between the front and rear grip arms 411. Besides, the holding gap 412 is aligned with the light path of the illuminating unit 52 such that a contour of an image captured in the image capturing unit 53 is formed by a non-light-exposed area which is projected by a profile of the threaded object 20, as shown in Fig. 9.

The spindle unit 6 includes a second support frame 61, an overhang mount 62, a rotary spindle 63, a fitting piece 64, and a second drive unit 65. The second support frame 61 is disposed to be movable relative to the mounting post 32 along the second guideway 323. The overhang mount 62 is disposed to extend from the second support frame 61 in the transverse direction and above the holding gap 412. The rotary spindle 63 is disposed on and rotatable relative to the overhang mount 62 about a spindle axis oriented in the upright direction to be in line with the holding gap 412. The fitting piece 64 is disposed to extend downwardly from the rotary spindle 63 along the spindle axis and is adapted to turn the threaded object 20 posed in the holding gap 412 so as to adjust an angular position of the threaded object 20. The second drive unit 65 is disposed on the overhang mount 62 and is controlled to rotate the rotary spindle 63 about the spindle axis. In this embodiment, the second drive unit 65 is a stepped motor, and the rotary spindle 63 is a chuck spindle.

Referring to Figs. 1 and 2, the control unit 7 includes a controller 71, a display 72, and an inputting interface 73. The controller 71 is electrically connected to and controls the actuations of the image capturing unit 53, the first drive unit 54, and the second drive unit 65, and has a processing unit which receives and analyzes the captured image to provide quantitative information of the profile of the threaded object 20. The display 72 is electrically connected to the controller 71 to display the quantitative information. The inputting interface 73 is electrically connected to the controller 71 to permit the predetermined data to be fed into the controller 71. For example, the display 72 includes a display screen 721 and a printer 722. The inputting interface 73 includes a keyboard 731 and a mouse 732.

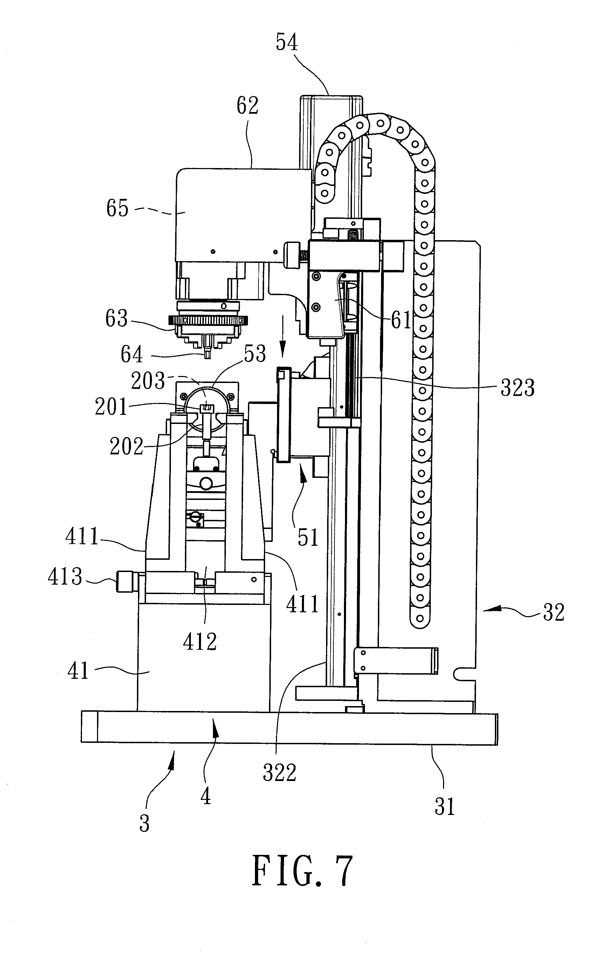

Referring to Figs. 1, 6 and 7, in use, a threaded object 20 to be inspected is held by the grip arms 411 to have a head 201 placed on top portions of the grip arms 411 and a shank 202 placed in the holding gap 412. Next, by operation of the inputting interface 73, the first support frame 51 is controlled to be moved by the first drive unit 54 so as to carry the image capturing unit 53 to permit the light path to be in alignment with the shank axis of the threaded object 20. A contour of a shadow image captured in the image capturing unit 53 is formed by a non-light-exposed area and is processed by the processing unit in the controller 71 so as to obtain the quantitative information that is displayed by the display 72. Therefore, a thread form of a threaded object 20 can be measured conveniently and precisely. By virtue of the adjusting screw member 413, the distance between the grip arms 411 can be adjusted to hold a variety of threaded objects.

Further, by operation of the inputting interface 73, the second support frame 61 is controlled to be moved downwardly toward the grip arms 411 to bring the fitting piece 64 into engagement with an insert hole 203 in the head 201 of the threaded object 20. Next, the second drive unit 65 is controlled to rotate the rotary spindle 63 about the spindle axis so as to permit the image capturing unit 53 to capture the image of the entire profile of the threaded obj ect 20. While the fitting piece 64 is configured to be inserted into the insert hole 203 of the threaded object 20, the fitting piece 64 may be alternatively in the form of a socket which is sleeved on the head 201 of the threaded object 20 for rotating the same.

When a longer threaded object 20 is to be measured, by means of the optoelectronic sensing unit 327 which is disposed to determine the moving distance of the first support frame 51 (i.e., the moving distance of the illuminating unit 52 and the image capturing unit 53), several images can be captured successively for a subsequent processing step of combining the captured images together to thereby form a contour of an image of the threaded object 20.

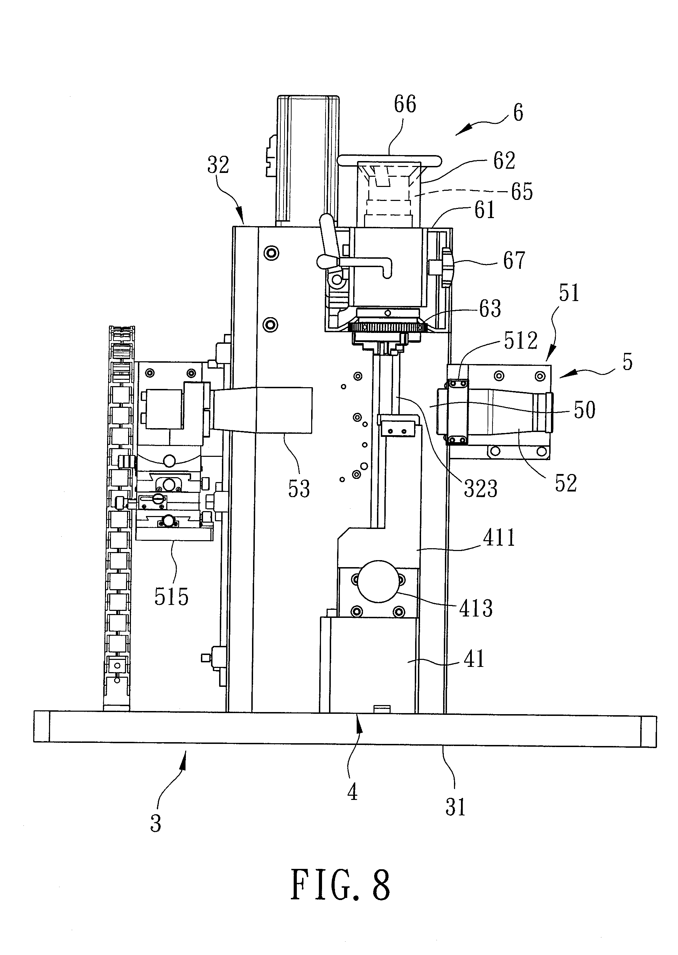

Referring to Fig. 8, the second preferred embodiment of a thread form measurement device according to this invention is shown to be similar to the first embodiment, except that a third drive unit 66 disposed to be manually operable to move the second support frame 61 along the second guideway 323, and that a fourth drive unit 67 is disposed to be manually operable to move the rotary spindle 63 so as to adjust the distance between the rotary spindle 63 and the grip arms 411. In this embodiment, each of the third and fourth drive units 66, 67 may be provided with a hand wheel.

## Claims

1. A thread form measurement device for measuring a threaded object (20) which defines a shank axis, **characterized in that** said thread form measurement device comprises:
a platform (31);
a mounting post (32) extending from said platform (31) in an upright direction;
a first support frame (51) which is disposed to be movable relative to said mounting post (32) along a first guideway (322) that extends in the upright direction, and which has left and right support regions (511, 510) opposite to each other in a longitudinal direction transverse to the upright direction;
left and right holding brackets (515, 512) which are disposed to extend from said left and right support regions (511, 510), respectively, in a direction transverse to both the upright direction and the longitudinal direction, and which are apart from each other by an accommodation space (50);
an illuminating unit (52) which is disposed on and carried by said right holding bracket (512), and which is configured to emit a beam of light along a light path toward said accommodation space (50);
an image capturing unit (53) which is disposed on and carried by said left holding bracket (515), and which has an obj ect lens configured in alignment with the light path to capture the light beam;
aseatpost (41) disposed to extend from said platform (31) in the upright direction to terminate at a stage surface; and
front and rear grip arms (411) which are disposed in said accommodation space (50) and on said stage surface, and which are adj ustably spaced apart from each other in the transverse direction by a holding gap (412), said holding gap (412) being adapted to have the threaded object (20) posed therein with the shank axis oriented along said holding gap (412) when the threaded object (20) is held by and between said front and rear grip arms (411), and being configured to be aligned with the light path such that a contour of an image captured in said image capturing unit (53) is formed by a non-light-exposed area which is projected by a profile of the threaded object (20).

2. The thread form measurement device according to Claim 1, further **characterized by**:
a second support frame (61) which is disposed to be movable relative to said mounting post (32) along a second guideway (323) that extends parallel to said first guideway (322);
an overhang mount (62) which is disposed to extend from said second support frame (61) in the transverse direction and above said holding gap (412);
a rotary spindle (63) which is disposed on and rotatable relative to said overhang mount (62) about a spindle axis oriented in the upright direction to be in line with said holding gap (412); and
a fitting piece (64) which is disposed to extend downwardly from said rotary spindle (63) along the spindle axis and which is adapted to turn the threaded object (20) posed in the holding gap (412) so as to adjust an angular position of the threaded object (20).

3. The thread form measurement device according to Claim 2, **characterized in that** said left holding bracket (515) includes a linearly moving portion (513) which is disposed on and linearly movable relative to said left support region (511) in the longitudinal direction so as to adjust a distance between said object lens and said illuminating unit (52), and a turning portion (514) which is disposed on and angularly displaceable relative to said linearly moving portion (513) and on which said image capturing unit (53) is disposed so as to adjust an angular position of said object lens relative to said illuminating unit (52).

4. The thread form measurement device according to Claim 3, further **characterized by** an optoelectronic limit switch (325, 326) disposed between said mounting post (32) and said first support frame (51) to limit the movement of said first support frame (51) between uppermost and lowermost positions.

5. The thread form measurement device according to Claim 4, further **characterized by** an optoelectronic sensing unit (327) disposed on said mounting post (32) and having a sensor which extends in the upright direction and which is disposed to determine a distance of the movement of said first support frame (51) along said first guideway (322).

6. The thread form measurement device according to Claim 5, further **characterized by** an adjusting screw member (413) disposed to synchronously move said front and rear grip arms (411) closer to or away from each other so as to adjust the dimension of said holding gap (412).

7. The thread form measurement device according to Claim 2, further **characterized by**:
a first drive unit (54) controlled to move said first support frame (51) along the first guideway (322);
a second drive unit (65) controlled to rotate said rotary spindle (63) about the spindle axis;
a controller (71) electrically connected to and controlling actuation of said image capturing unit (53), said first drive unit (54), and said second drive unit (65), and having a processing unit which receives and analyzes the captured image to provide quantitative information of the profile of the threaded object (20) ; and
a display (72) electrically connected to said controller (71) to display the quantitative information.

8. The thread form measurement device according to Claim 7, further **characterized by** an inputting interface (73) electrically connected to said controller (71) topermit predetermined data to be fed into said controller (71).

9. The thread form measurement device according to Claim 8, **characterized in that** said first drive unit (54) is a servo motor, and said second drive unit (65) is a stepped motor.

10. The thread form measurement device according to Claim 2, further **characterized by**:
a third drive unit (66) disposed to be manually operable to move said second support frame (61) along said second guideway (323); and
a fourth drive unit (67) disposed to be manually operable to move said rotary spindle (63) so as to adjust the distance between said rotary spindle (63) and said left and right grip arms (411).
